(19) 

Europäisches
Patentamt
European
Patent Office
Office européen
des brevets

(11) **EP 4 760 812 A1**

(12) **EUROPEAN PATENT APPLICATION**

(43) Date of publication:
**17.06.2026 Bulletin 2026/25**

(21) Application number: **25222410.0**

(22) Date of filing: **10.12.2025**

(51) International Patent Classification (IPC):
*H01M 4/36* (2006.01)    *H01M 4/505* (2010.01)
*H01M 4/525* (2010.01)    *H01M 10/0525* (2010.01)

(52) Cooperative Patent Classification (CPC):
**H01M 4/525; H01M 4/364; H01M 4/505;
H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.12.2024 KR 20240182934**

(71) Applicants:
• **SK innovation Co., Ltd.**
  **Seoul 03188 (KR)**
• **SK On Co., Ltd.**
  **Seoul 03161 (KR)**

(72) Inventors:
• **JANG, Hwan Ho**
  **34124 Daejeon (KR)**
• **YU, Do Ae**
  **34124 Daejeon (KR)**
• **KWON, Bob Jin**
  **34124 Daejeon (KR)**
• **CHOI, Je Nam**
  **34124 Daejeon (KR)**
• **GIL, Na Eun**
  **34124 Daejeon (KR)**

(74) Representative: **Stolmár & Partner**
**Patentanwälte PartG mbB**
**Blumenstraße 17**
**80331 München (DE)**

(54) **LITHIUM SECONDARY BATTERY AND METHOD OF OPERATING LITHIUM SECONDARY BATTERY**

(57)    A lithium secondary battery, and a method of operating a lithium secondary battery are provided. The lithium secondary battery includes a cathode including a cathode active material layer that includes a lithium-nickel metal oxide, and an anode opposing the cathode. A full width at half maximum ratio or a relative peak area ratio of the lithium secondary battery is 70% or more.

## FIG. 3

**Description**

BACKGROUND

1. Field

Embodiments of the present disclosure relates to a lithium secondary battery and a method of operating a lithium secondary battery. More particularly, embodiments of the present disclosure relates to a lithium secondary battery including a lithium-nickel-based cathode active material and a method of operating the same.

2. Descriptions of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as a hybrid automobile, an electric vehicle, etc.
Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.
For example, the lithium secondary battery may include an electrode assembly including repeatedly stacked cathodes and anodes, and an electrolyte solution impregnating the electrode assembly. The lithium secondary battery may further include an outer packaging material, e.g., a pouch that accommodates the electrode assembly and the electrolyte.
For example, a lithium-nickel metal oxide is used as a cathode active material. Recently, as the lithium secondary battery is applied to a large-capacity battery such as an electric vehicle battery, a lithium battery capable of operating at high voltage to provide high power is being developed.
However, high-voltage charging/discharging may deteriorate or transform chemical structure and/or crystal properties of the lithium-nickel metal oxide, thereby degrading operational stability of the lithium secondary battery.

SUMMARY

According to an aspect of the present disclosure, there is provided a lithium secondary battery having improved capacity properties and stability.
According to an aspect of the present disclosure, there is provided a method of operating a lithium secondary battery with improved capacity properties and stability.
A lithium secondary battery includes a cathode including a cathode active material layer that includes a lithium-nickel metal oxide, and an anode opposing the cathode. A full width at half maximum ratio defined by Equation 1 or a relative peak area ratio defined by Equation 2 is 70% or more.

Full width at half maximum ratio (%) = 100 × {(a full width at half maximum of a (107) plane peak measured by an X-ray diffraction (XRD) analysis from the cathode active material layer after charging at a charging voltage of 4.0 V) / (a full width at half maximum of the (107) plane peak measured by the XRD analysis from the cathode active material layer after charging at a charging voltage of 4.3 V)}  [Equation 1]

Relative peak area ratio (%) = 100 × {(a ratio of a peak area to a peak height at a (107) plane measured by the XRD analysis from the cathode active material layer after charging at a charging voltage of 4.0 V) / (a ratio of a peak area to a peak height at the (107) plane measured by the XRD analysis from the cathode active material layer after charging at a charging voltage of 4.3 V)}.  [Equation 2]

In some embodiments, the full width at half maximum ratio and the relative peak area ratio may each be 70% or more.
In some embodiments, the full width at half maximum ratio or the relative peak area ratio may be in a range from 75% to 95%.
In some embodiments, the lithium-nickel metal oxide may have a single particle form.
In some embodiments, the lithium-nickel metal oxide may further include cobalt and manganese, and a mole fraction of nickel among the total number of moles of nickel, cobalt and manganese may be 0.5 or more, and less than 0.9.
In some embodiments, the mole fraction of nickel may be in a range from 0.55 to 0.75.

In some embodiments, the lithium-nickel metal oxide may further include at least one auxiliary element selected from Al, W, Zr, Ti, Y and B.

In some embodiments, the auxiliary element may include three or more elements selected from Al, W, Zr, Ti and Y.

In some embodiments, a loading amount of the cathode active material layer may be in a range from 15 mg/cm$^2$ to 25 mg/cm$^2$.

In some embodiments, an electrode density of the cathode active material layer may be in a range from 3.3 g/cm$^3$ to 3.8 g/cm$^3$.

In some embodiments, the anode may include a cathode current collector, and a cathode active material layer including a lower active material layer and an upper active material layer sequentially disposed on the cathode current collector.

In some embodiments, the lower active material layer may include a carbon-based active material, and the upper active material layer may include a silicon-based active material.

In some embodiments, the upper active material layer may include the carbon-based active material and the silicon-based active material, and the lower active material layer may be devoid of the silicon-based active material.

In some embodiments, each of the lower active material layer and the upper active material layer may include the carbon-based active material and the silicon-based active material. A content of the silicon-based active material based on a total weight of the upper active material layer may be greater than a content of the silicon-based active material based on a total weight of the lower active material layer.

In a method for operating a lithium secondary battery, a lithium secondary battery including a cathode active material layer that includes a lithium-nickel metal oxide is prepared. An X-ray diffraction (XRD) analysis is performed on the cathode active material layer included in the lithium secondary battery for each charging voltage while increasing the charging voltage of the lithium secondary battery. A maximum voltage at which an XRD peak property at a specific plane becomes maximum is measured. A driving voltage is selected in a voltage range equal to or less than the maximum voltage.

In some embodiments, the specific plane may be a (003) plane or a (107) plane.

In some embodiments, the XRD peak property includes a full width at half maximum of a peak of the (003) plane or the (107) plane.

In some embodiments, the XRD peak property may include a ratio of an area to a height of a peak at the (003) plane or the (107) plane.

In some embodiments, the driving voltage is selected in a range from the maximum voltage to a voltage lower than the maximum voltage by 0.6 V.

In some embodiments, the XRD analysis is performed in a charging voltage range from 3.7 V to 4.8 V.

In a lithium secondary battery according to embodiments of the present disclosure, a ratio of an XRD peak property at a low voltage to an XRD peak property at a high voltage may be maintained within a predetermined range. Thus, capacity retention and rapid charge life-span properties of the secondary battery at high and room temperatures may be improved.

In a method for operating a lithium secondary battery according to embodiments of the present disclosure, a charging voltage may be set at a voltage lower than a maximum voltage at which a maximum value of an XRD property is measured at a specific plane. Accordingly, deterioration and deformation of crystal properties of the lithium-nickel metal oxide used as a cathode active material may be prevented, and a stable capacity retention may be achieved.

The lithium secondary battery according to the present disclosure may be widely applied in green technology fields such as an electric vehicle, a battery charging station, a solar power generation, a wind power generation, etc., using a battery, etc. The lithium secondary battery according to the present disclosure may be used for eco-friendly electric vehicles and hybrid vehicles to prevent a climate change by suppressing air pollution and greenhouse gas emissions. etc.

BRIEF DESCRIPTION OF THE DRAWINGS

FIG. 1 and FIG. 2 are a schematic plan view and a schematic cross-sectional view, respectively, illustrating a lithium secondary battery in accordance with example embodiments.

FIG. 3 is a schematic cross-sectional view illustrating an anode included in a lithium secondary battery according to some example embodiments.

FIG. 4 is a flowchart illustrating a method of operating a lithium secondary battery according to example embodiments.

FIGS. 5A and 5B are XRD measurement graphs according to voltage measured at a (003) plane.

FIGS. 6A and 6B are XRD measurement graphs according to voltage measured at a (107) plane.

FIG. 7 is a graph showing room temperature capacity retentions of coin-half cells according to Example and Comparative Examples.

FIG. 8 is a graph showing high temperature capacity retentions of secondary batteries according to Examples.

FIG. 9 is a graph showing rapid charge capacity retentions of secondary batteries according to Examples and Comparative Example.

## DETAILED DESCRIPTION OF THE EMBODIMENTS

According to embodiments of the present disclosure, a lithium secondary battery including a cathode that includes a lithium-nickel metal oxide and a method of operating the same are provided.

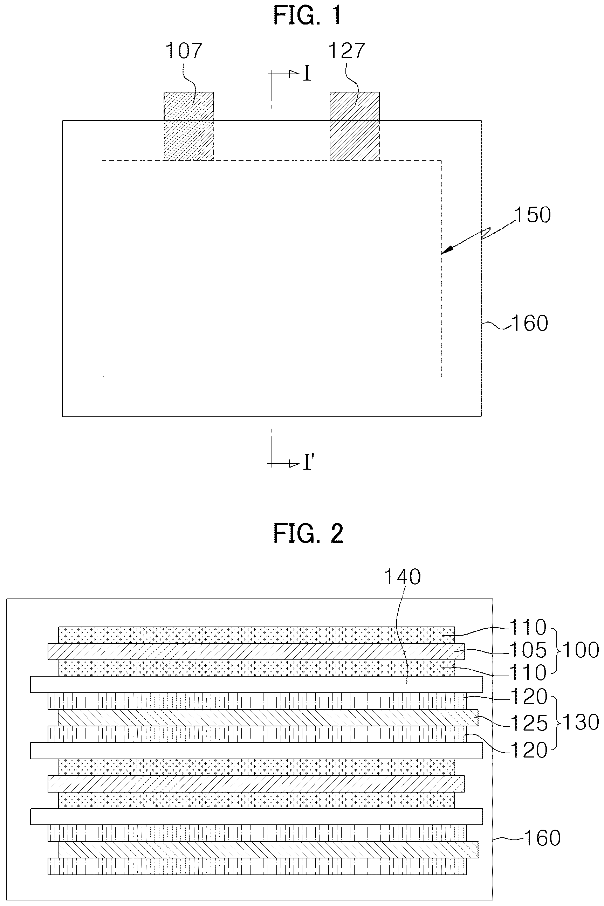

FIG. 1 and FIG. 2 are a schematic plan view and a cross-sectional view, respectively, illustrating a lithium secondary battery according to example embodiments. For example, FIG. 2 is a cross-sectional view cut along a line I-I' of FIG. 1 in a thickness direction.

Referring to FIG. 1 and FIG. 2, a lithium secondary battery includes an electrode assembly 150 including a cathode 100 and an anode 130 which may be repeatedly stacked on each other. For example, a plurality of the cathodes 100 and the anodes 130 may be alternately and repeatedly stacked with a separator 140 interposed therebetween, so that the electrode assembly 150 may be formed.

The cathode 100 may include a cathode current collector 105, and a cathode active material layer 110 disposed on the cathode current collector 105. The cathode active material layer 110 may be disposed on at least one surface of an upper surface and a lower surface of the cathode current collector 105. The cathode active material layer 110 may be disposed on each of the upper surface and the lower surface of the cathode current collector 105.

The cathode current collector 105 may include stainless steel, nickel, aluminum, titanium, or an alloy thereof. The cathode current collector 105 may also include aluminum or stainless steel surface-treated with carbon, nickel, titanium, or silver. For example, a carbon coating may be formed on a surface of the cathode current collector 105.

The cathode active material layer 110 may include a cathode active material. The cathode active material may include a compound capable of reversibly intercalating and deintercalating lithium ions.

In example embodiments, , the cathode active material may include a lithium-nickel metal oxide. The lithium-nickel metal oxide may further include at least one of cobalt (Co), manganese (Mn) and aluminum (Al). In some embodiments, the lithium-nickel metal oxide may further include cobalt (Co) and manganese (Mn).

In some embodiments, the cathode active material or the lithium-nickel metal oxide may include a layered structure or a crystal structure represented by Chemical Formula 1.

$$[\text{Chemical formula 1}] \qquad Li_xNi_aM_bO_{2+z}$$

In Chemical Formula 1, $0.9 \leq x \leq 1.2$, $0.5 \leq a \leq 0.99$, $0.01 \leq b \leq 0.5$, and $-0.5 \leq z \leq 0.1$. As described above, M may include Co, Mn and/or Al, and may further include an auxiliary element.

The chemical structure represented by Chemical Formula 1 indicates a bonding relationship included in a layered structure or a crystal structure of the cathode active material, and does not exclude other additional elements. For example, M may include Co and/or Mn, and Co and/or Mn may be provided as a main active element of the cathode active material together with Ni. Chemical Formula 1 is provided to express the bonding relationship of the main active elements and is to be understood to encompass introduction and substitution of the additional elements.

In an embodiment, an auxiliary element for enhancing chemical stability of the cathode active material or the layered structure/crystal structure may be further included in addition to the main active element. The auxiliary element may be incorporated together into the layered structure/crystal structure to form a bond, and this case is to be understood as being included within the scope of the chemical structure represented by Chemical Formula 1.

The auxiliary elements may include, e.g., at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act as auxiliary active element such as Al which may contribute to capacity/power activity of the cathode active material together with Co or Mn.

In some embodiments, the auxiliary element may include at least one element of Al, W, Zr, Ti, Y and B. In this case, stability of the chemical structure/crystal structure of the lithium-nickel metal oxide may be enhanced, and a ratio of an XRD property at a low voltage to an XRD property at a high voltage, as will be described below, may be more effectively maintained.

In an embodiment, the auxiliary element may include at least three elements of Al, W, Zr, Ti and Y. In an embodiment, the auxiliary element may include at least four element of Al, W, Zr, Ti and Y. For example, the auxiliary element may include Al, W and Zr, and may optionally further include Y and Ti.

In an embodiment, the auxiliary element may include Al, W, Zr and Y.

For example, the cathode active material or the lithium-nickel metal oxide may include a layered structure or a crystal structure represented by Chemical Formula 1-1.

$$[\text{Chemical formula 1-1}] \qquad Li_xNi_aM1_{b1}M2_{b2}O_{2+z}$$

In Chemical Formula 1-1, M1 may include Co, Mn and/or Al. M2 may include the above-described auxiliary element. In Chemical Formula 1-1, $0.9 \leq x \leq 1.2$, $0.5 \leq a \leq 0.99$, $0.01 \leq b1+b2 \leq 0.5$, and $-0.5 \leq z \leq 0.1$.

The cathode active material may further include a coating element or a doping element. For example, elements substantially identical or similar to the above-described auxiliary element may be used as the coating element or the doping element. For example, a single element among the above-mentioned elements or two or more of the above-mentioned elements may be used as the coating element or the doping element.

The coating element or the doping element may be present on a surface of the lithium-nickel metal oxide particle, or may penetrate through a surface of the lithium-nickel metal oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide with an increased nickel content may be used.

Ni may be provided as a transition metal associated with power and capacity of the lithium secondary battery. Accordingly, a high-nickel (High-Ni) composition may be employed in the cathode active material as described above, so that a high-capacity cathode and a high-capacity lithium secondary battery may be implemented.

However, as a content of Ni increases, long-term storage stability and life-span stability of the cathode or the secondary battery may be relatively lowered, and side reactions with an electrolyte may also be increased. However, according to example embodiments, Co may be included to maintain electrical conductivity, and life-span stability and capacity retention properties may be improved through Mn.

In some embodiments, the content of Ni in the NCM-based lithium oxide (e.g., a mole fraction of nickel among total moles of nickel, cobalt and manganese) may be 0.55 or more, or 0.6 or more. In the nickel content range, sufficient capacity of the lithium secondary battery may be achieved.

In some embodiments, the content (mole fraction) of Ni in the NCM-based lithium oxide may be 0.9 or less, less than 0.9, 0.88 or less, 0.85 or less, 0.8 or less, or 0.75 or less. In an embodiment, the mole fraction of nickel may be 0.5 or more, and less than 0.9. In an embodiment, the mole fraction of nickel may be in a range from 0.5 to 0.8, from 0.55 to 0.75, from 0.55 to 0.7, from 0.6 to 0.8, from 0.6 to 0.75, or from 0.6 to 0.7.

In the above-described nickel content range, the ratio of the XRD peak property at the low voltage to the XRD peak property at the high voltage, which will be described below, may be more effectively maintained while sufficiently achieving the capacity of the lithium secondary battery.

In example embodiments, , the lithium-nickel metal oxide may have a single particle form.

The term "single particle form" herein is used to exclude a secondary particle formed by aggregation of a plurality of primary particles. For example, in a particle having the single particle form included in the lithium-transition metal oxide particles, a secondary particle structure in which primary particles (e.g., 20 or more, 30 or more, 40 or more, 50 or more, or the like) are assembled or aggregated may be excluded.

The term "single particle form" as used herein, e.g., does not exclude a monolithic form observed (e.g., in a scanning electron microscope (SEM) image) in a form that, e.g., 2 or more and less than 20, or 2 to 10 single particle are attached or adhered to each other.

In some embodiments, the lithium-nickel metal oxide may have a structure or a form in which a plurality of primary particles are integrally merged together and substantially converted into a single particle.

For example, the lithium-nickel metal oxide may have a granular or spherical single particle form.

In example embodiments, a content of the above-described lithium-nickel metal oxide based on a total weight of the cathode active material may be 50 wt% or more, 60 wt% or more, 80 wt% or more, 90 wt% or more, or 95 wt% or more. In some embodiments, the cathode active material may substantially consist of the above-described lithium-nickel metal oxide.

In some embodiments, the cathode active material may further include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may further include, e.g., an Mn-rich active material, an LLO (Li rich layered oxide)/OLO (Over Lithiated Oxide)-based active material or a Co-less active material having a chemical structure or a crystal structure represented by Chemical Formula 2.

$$[\text{Chemical Formula 2}] \qquad p[Li_2MnO_3] \cdot (1-p)[Li_qJO_2]$$

In Chemical Formula 2, $0<p<1$, $0.9 \leq q \leq 1.2$, and J may include at least one element selected from Mn, Ni, Co, Fe, Cr, V, Cu, Zn, Ti, Al, Mg and B.

For example, a cathode mixture in the form of a slurry may be prepared by mixing the cathode active material with a cathode binder, a conductive material, or the like, in a solvent. The cathode mixture may be coated on the cathode current collector 105, and then dried and pressed to form the cathode active material layer 110.

Non-limiting examples of a solvent used for preparing the cathode mixture include N-methyl-2-pyrrolidone (NMP), dimethylformamide, dimethylacetamide, N,N-dimethylaminopropylamine, ethylene oxide, tetrahydrofuran, or the like.

The cathode binder may include polyvinylidenefluoride (PVDF), vinylidene fluoride-hexafluoropropylene copolymer (poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR), or the like. In an embodiment, a PVDF-based binder may be used as the cathode binder.

The conductive material may be added to enhance conductivity and/or mobility of lithium ions or electrons of the cathode active material layer 110. For example, the conductive material may include a carbon-based conductive material such as graphite, carbon black, acetylene black, ketjen black, graphene, carbon nanotube (CNT), a vapor-grown carbon fiber (VGCF), a carbon fiber, or the like, and/or a metal-based conductive material including tin, tin oxide, titanium oxide, a perovskite materials such as $LaSrCoO_3$, $LaSrMnO_3$, or the like, but is not limited thereto.

In some embodiments, the cathode conductive material may include a linear-type conductive material such as a CNT-based conductive material, and may optionally further include a dot-type conductive material such as carbon black.

In some embodiments, the cathode conductive material includes the linear-type conductive material and the dot-type conductive material, and a content (wt%) of the linear-type conductive material based on a total weight of the cathode conductive material may be greater than a content of the dot-type conductive material. Accordingly, distribution uniformity of the conductive material may be improved while enhancing a conductivity in the cathode 100. Thus, reliability/uniformity of the XRD property measurement on the surface of the cathode active material layer 110, as will be described below, may be easily achieved.

In some embodiments, the cathode mixture may further include a thickener and/or a dispersant, or the like. In an embodiment, the cathode mixture may further include a thickener such as carboxymethyl cellulose (CMC).

A content of the cathode active material based on the total weight of the cathode active material layer 110 or based on a solid content of the cathode mixture may be in a range from 90 wt% to 99 wt%, or from 95 wt% to 99 wt%.

A content of the binder based on the total weight of the cathode active material layer 110 or based on the solid content of the cathode mixture may be in a range from 0.5 wt% to 5 wt%, from 0.5 wt% to 3 wt%, from 0.5 wt% to 2 wt%, or from 0.5 wt% to 1 wt%.

A content of the conductive material based on the total weight of the cathode active material layer 110 or based on the solid content of the cathode mixture may be in a range from 0.5 wt% to 5 wt%, from 0.5 wt% to 4 wt%, from 0.5 wt% to 3 wt%, or from 0.5 wt% to 2 wt%.

In example embodiments, an electrode density of the cathode active material layer 110 may be in a range from 3.3 $g/cm^3$ to 3.8 $g/cm^3$. In some embodiments, the electrode density of the cathode active material layer 110 may be in a range from 3.6 $g/cm^3$ to 3.8 $g/cm^3$, or from 3.6 $g/cm^3$ to 3.7 $g/cm^3$. In an embodiment, the electrode density of the cathode active material layer 110 may be in a range from 3.64 $g/cm^3$ to 3.70 $g/cm^3$, from 3.64 $g/cm^3$ to 3.67 $g/cm^3$, from 3.64 $g/cm^3$ to 3.66 $g/cm^3$, or from 3.64 $g/cm^3$ to 3.65 $g/cm^3$.

The electrode density of the cathode active material layer 110 may be calculated by measuring a width, a length and a height of the cathode active material layer 110 to calculate a volume, and dividing the volume by a weight obtained by subtracting a weight of the cathode current collector 105 from a weight of the cathode 100.

In example embodiments, a loading amount of the cathode active material layer 110 (e.g., a weight of the cathode active material layer 110 per unit area of the cathode current collector 105) may be in a range from 15 $mg/cm^2$ to 25 $mg/cm^2$. In some embodiments, the loading amount of the cathode active material layer 110 may be in a range from 22 $mg/cm^2$ to 25 $mg/cm^2$, or in a range from 22.5 $mg/cm^2$ to 25.0 $mg/cm^2$. In an embodiment, the loading amount of the cathode active material layer 110 may be in a range from 23.0 $mg/cm^2$ to 25.0 $mg/cm^2$, from 23.0 $mg/cm^2$ to 24.0 $mg/cm^2$, or from 23.5 $mg/cm^2$ to 24.0 $mg/cm^2$.

In the range of the electrode density and the loading amount, the stability of the cathode 100 in a high-voltage driving, and the ratio of the XRD peak property at low voltage to the XRD peak property at high voltage, as will be described below, may be more effectively maintained.

The anode 130 may include an anode current collector 125 and an anode active material layer 120. The anode active material layer 120 may be disposed on at least one surface of an upper surface and a lower surface of the anode current collector 125. The anode active material layer 120 may be disposed on each of the upper surface and the lower surface of the anode current collector 125.

For example, the anode current collector 125 may include copper, stainless steel, nickel, titanium, or an alloy thereof. In an embodiment, the anode current collector 125 may include copper or stainless steel surface-treated with carbon, nickel, titanium or silver.

An anode active material layer 120 may be formed by coating an anode mixture including an anode active material on the anode current collector 125, and then drying and pressing. For example, the anode mixture may be prepared by mixing and stirring the anode active material with a anode binder, a conductive material, and a thickener in a solvent.

The solvent may include, e.g., water, pure water, deionized water, distilled water, ethanol, isopropanol, methanol, acetone, n-propanol, t-butanol, or the like.

In example embodiments, the anode active material may include a silicon-based active material (e.g., a silicon-containing active material) and a carbon-based active material (e.g., a silicon-devoid and carbon-containing active material).

The silicon-based active material may include, e.g., Si, SiOx (0<x<2), a silicon-carbon composite (Si/C), a silicon oxide (silicate)-carbon composite (SiO/C), a silicon metal (Si-Metal), or the like. In some embodiments, the silicon-based active material may include a lithium-silicate compound, and may include a lithium-silicate compound containing a dopant such as magnesium, aluminum, or the like.

The carbon-based active material may include a crystalline carbon or an amorphous carbon. For example, the amorphous carbon may include hard carbon, coke, a mesocarbon microbead (MCMB), a mesophase pitch-based carbon fiber (MPCF), or the like. For example, the crystalline carbon may include natural graphite, artificial graphite, a graphitized coke, a graphitized MCMB, a graphitized MPCF, or the like.

In example embodiments, the crystalline carbon may be used as the carbon-based active material, and a graphite-based active material (natural graphite and/or artificial graphite) may be used.

Natural graphite may provide a relatively higher capacity than that of artificial graphite. Artificial graphite may have relatively higher chemical/physical stability than that of natural graphite.

In some embodiments, natural graphite or artificial graphite may be used as the graphite-based active material. In some embodiments, a mixture of natural graphite and artificial graphite may be used as the graphite-based active material. In this case, a mixing weight ratio of natural graphite and artificial graphite in the mixture may be in a range from 1:9 to 9:1, from 3:7 to 7:3, or from 4:6 to 6:4.

In some embodiments, the anode active material may include the silicon-based active material (e.g., SiOx (0<x<2)) and the carbon-based active material (e.g., natural graphite and/or artificial graphite). Through the introduction of the silicon-based active material, capacity properties in the anode 130 may be increased.

A content of the silicon-based active material based on a total weight of the anode active material may be in a range from 1 wt% to 10 wt%, from 2 wt% to 8 wt%, or from 3 wt% to 8 wt%. In the above range, capacity stability of the anode 130 may be obtained while suppressing instability of the silicon-based active material (e.g., expansion/contraction of the anode during charging/discharging). Additionally, transformation of XRD properties in the cathode 100, as described below, caused by instability in the anode 130 may be prevented.

Substantially the same or similar materials as those for the above-described cathode binder and conductive material may be used as the binder and the conductive material. In some embodiments, the anode binder may include a styrene-butadiene rubber (SBR)-based binder, and may be used together with the thickener such as carboxymethyl cellulose (CMC).

A content of the anode active material based on the total weight of the anode active material layer 120 or based on a solid content of the anode mixture may be in a range from 90 wt% to 99 wt%, or from 95 wt% to 99 wt%.

A content of the binder based on the total weight of the anode active material layer 120 or based on the solid content of the anode mixture may be in a range from 0.5 wt% to 5 wt%, from 1 wt% to 4 wt%, or from 1 wt% to 3 wt%.

A content of the conductive material based on the total weight of the anode active material layer 120 or based on the solid content of the anode mixture may be in a range from 0.01 wt% to 0.5 wt%, from 0.01 wt% to 0.2 wt%, or from 0.05 wt% to 0.1 wt%.

In example embodiments, an electrode density of the anode active material layer 120 may be in a range from 1.3 $g/cm^3$ to 1.8 $g/cm^3$. In some embodiments, the electrode density of the anode active material layer 120 may be in a range from 1.4 $g/cm^3$ to 1.7 $g/cm^3$, from 1.5 $g/cm^3$ to 1.7 $g/cm^3$, or from 1.6 $g/cm^3$ to 1.7 $g/cm^3$. The electrode density of the anode active material layer 120 may be calculated by measuring a width, a length and a height of the anode active material layer 120 to calculate a volume, and dividing the volume by a weight obtained by subtracting a weight of the anode current collector from a weight of the anode.

In example embodiments, a loading amount of the anode active material layer 120 (e.g., a weight of the anode active material layer 120 per unit area of the anode current collector 125) may be in a range from 5 $mg/cm^2$ to 15 $mg/cm^2$. In some embodiments, the loading amount of the anode active material layer 120 may be in a range from 10 $mg/cm^2$ to 15 $mg/cm^2$, or from 11 $mg/cm^2$ to 14 $mg/cm^2$. In an embodiment, the loading amount of the anode active material layer 120 may be in a range from 11 $mg/cm^2$ to 12 $mg/cm^2$, from 11.0 $mg/cm^2$ to 11.6 $mg/cm^2$, from 11.0 $mg/cm^2$ to 11.5 $mg/cm^2$, or from 11.1 $mg/cm^2$ to 11.4 $mg/cm^2$.

In the range of the electrode density and the loading amount, the XRD properties as described below in the cathode 100 may also be more effectively maintained.

The separator 140 may include a porous polymer film or a porous non-woven fabric. The porous polymer film may include a polyolefin-based polymer such as an ethylene polymer, a propylene polymer, an ethylene/butene copolymer, an ethylene/hexene copolymer, and an ethylene/methacrylate copolymer, or the like. The porous non-woven fabric may include a high-melting point glass fiber, a polyethylene terephthalate fiber, or the like.

The separator 140 may also include a ceramic-based material. For example, inorganic particles may be coated on a polymer film or dispersed in the polymer film to improve heat resistance.

The electrode assembly 150 may be manufactured in a winding type, a stacking type, a zigzag-folding type, or a stack-folding type.

The electrode assembly 150 may be accommodated in a case 160 together with an electrolyte solution, and the lithium secondary battery may be defined. In example embodiments, a non-aqueous electrolyte solution may be used as the electrolyte solution.

The non-aqueous electrolyte solution may include a lithium salt serving as an electrolyte, and an organic solvent. The lithium salt may be represented by, e.g., $Li^+X^-$. Examples of the anion ($X^-$) of the lithium salt may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$.

As the organic solvent, e.g., propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, or the like, may be used. These may be used alone or in a combination of two or more therefrom.

In some embodiments, a solid electrolyte may be used instead of the above-described non-aqueous electrolyte solution. In this case, the lithium secondary battery may be manufactured in the form of an all-solid-state battery. Further, a solid electrolyte layer may be disposed between the cathode and the anode instead of the above-described separator.

The solid electrolyte may include a sulfide-based electrolyte. Non-limiting examples of the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (where m and n are positive numbers, and Z is Ge, Zn or Ga), $Li_2S-GeS_2$, $Li_2S-SiS_2-Li_3PO_4$, $Li_2S-SiS_2-Li_pMO_q$ (where p and q are positive numbers, and M is P, Si, Ge, B, Al, Ga or In), $Li_{7-x}PS_6^-xCl_x$ ($0\leq x\leq 2$), $Li_{7-x}PS_{6-x}Br_x$ ($0\leq x\leq 2$), $Li_{7-x}PS_{6-x}I_x$ ($0\leq x\leq 2$), or the like. These may be used alone or in a combination of two or more therefrom.

In an embodiment, the solid electrolyte may include an oxide-based amorphous solid electrolyte such as, e.g., $Li_2O-B_2O_3-P_2O_5$, $Li_2O-SiO_2$, $Li_2O-B_2O_3$, $Li_2O-B_2O_3-ZnO$ or the like.

As illustrated in FIG. 1, an electrode tab (a cathode tab and an anode tab) may protrude from each of the cathode current collector 105 and the anode current collector 125 included in each electrode cell, and may extend to one end portion of the case 160. The electrode tabs may be fused with the one end portion of the case 160 and connected to electrode leads (a cathode lead 107 and an anode lead 127) extended or exposed to an outside of the case 160.

Although FIG 1 illustrates that the cathode lead 107 and the anode lead 127 protrude from an upper side of the case 160 in a plan view, the positions of the electrode leads are not limited thereto. For example, the electrode leads may protrude from at least one of both sides of the case 160, or may protrude from a lower side of the case 160. The cathode lead 107 and the anode lead 127 may protrude from different sides of the case 160.

The lithium secondary battery may be fabricated in, e.g., a cylindrical type using a can, a prismatic type, a pouch type, or a coin type.

According to embodiments of the present disclosure, a ratio of an X-ray diffraction (XRD) property at a specific plane measured by an XRD analysis of a surface of the cathode active material layer measured after charging at a low voltage (a second voltage) to an XRD property at a specific plane measured by the XRD analysis of the surface of the cathode active material layer 110 after charging at a high voltage (a first voltage) may be maintained within a predetermined range. Accordingly, stable capacity retention and low resistance properties of the lithium secondary battery may be maintained even during a high voltage driving.

According to embodiments of the present disclosure, the first voltage may be 4.3V and the second voltage may be 4.0V. The specific plane may be a (107) plane. The XRD property may be a full width at half maximum (FWHM) of a peak at the (107) plane, or may be a ratio of a peak area to a peak intensity (or a peak height) (hereinafter, may be abbreviated as an A/H ratio) at the (107) plane.

During the high voltage driving of the lithium secondary battery, structural deformation due to lithium de-intercalation in the lithium-nickel metal oxide may be caused. For example, as a charging voltage increases, the crystal structure of the lithium-nickel metal oxide may be converted from an initial structure to a contracted state through an expanded state in volume. Accordingly, the full width at half maximum of the peak and the A/H ratio may be fluctuated.

The fluctuation of the above-described XRD property may be easily measured from the (107) plane. Thus, high voltage driving stability of the lithium secondary battery may be improved by controlling XRD property values measured at the (107) plane within the predetermined range.

According to embodiments of the present disclosure, a full width at half maximum ratio defined by Equation 1 may be 70% or more.

Full width at half maximum ratio (%) = 100 × {(a full width at half maximum of a (107) plane peak measured by an XRD analysis from a cathode active material layer after charging at a charging voltage of 4.0V) / (a full width at half maximum of the (107) plane peak measured by the XRD analysis from the cathode active material layer after charging at a charging voltage of 4.3V)}.

[Equation 1]

According to embodiments of the present disclosure, a relative peak area ratio defined by Equation 2 may be 70% or more.

Relative peak area ratio (%) = 100 × {(a ratio of a peak area to a peak height at a (107) plane measured by an XRD analysis from a cathode active material layer after charging at a charging voltage of 4.0V) / (a ratio of a peak area to a peak height at the (107) plane measured by the XRD analysis from the cathode active material layer after charging at a charging voltage of 4.3V)}.

[Equation 2]

For example, after charging the lithium secondary battery at each of 4.3V and 4.0V, the lithium secondary battery may be disassembled to separate the cathode 100 from the electrode assembly 150. After washing the separated cathode 100 with an organic solvent such as N-methy-2-lpyrrolidone (NMP) or dimethyl carbonate (DMC), the XRD analysis may be performed on the surface of the cathode active material layer 100. The charging may be performed under CC-CV 0.1C SOC (State of Charge) 100%, 0.05C CUT-OFF conditions at each charging voltage.

The XRD analysis may be performed under the following measurement conditions.

- X-ray Source Anode: Cu
- Generator Voltage: 45 kV, Tube Current: 40 mA
- Scan 2theta range: 56.5~63°
- Step Size: 0.02626°
- Time per Scan: 100s

If the FWHM ratio is less than 70% or the relative peak area ratio is less than 70%, structural/crystalline deformation of the cathode active material may be caused during high-voltage charging/discharging. Accordingly, sufficient capacity and resistance retention properties may not be provided during the high-voltage operation. In some embodiments, the FWHM ratio and the relative peak area ratio may each be 70% or more.

In some embodiments, the FWHM ratio may be 75% or more, 80% or more, 85% or more, or 90% or more. In an embodiment, the FWHM ratio may be in a range from 70% to 95%, from 75% to 95%, from 80% to 95%, from 85% to 95%, or from 90% to 95%.

In some embodiments, the relative peak area ratio may be 75% or more, 80% or more, 85% or more, or 90% or more. In an embodiment, the relative peak area ratio may be in a range from 70% to 95%, from 75% to 95%, from 80% to 95%, from 85% to 95%, or from 90% to 95%.

In the above-described range, the high-voltage operation stability and capacity retention properties of the lithium secondary battery or the cathode 100 may be more effectively implemented.

The FWHM ratio and the relative peak area ratio may be adjusted by variables such as the composition of the above-described lithium-nickel metal oxide (e.g., the mole fraction of nickel), process conditions for preparing the lithium-nickel metal oxide (e.g., , a calcination temperature, a calcination heating rate, a calcination time, a co-precipitation reaction temperature, a co-precipitation reaction time, etc.), the composition of the conductive material in the cathode, the loading amount of the cathode, the electrode density of the cathode, or the like.

The FWMH ratio and the relative peak area ratio may also be changed by a composition and a structure of the anode 130. For example, a type and a content of the anode active material included in the anode active material layer 120, and a stacked structure of the anode active material layer 120, etc., may also serve as influencing factors on the XRD property measured from the cathode active material layer 110 after charging. Additionally, a ratio of an anode capacity to a cathode capacity (N/P ratio) may also serve as an influencing factor on the XRD property.

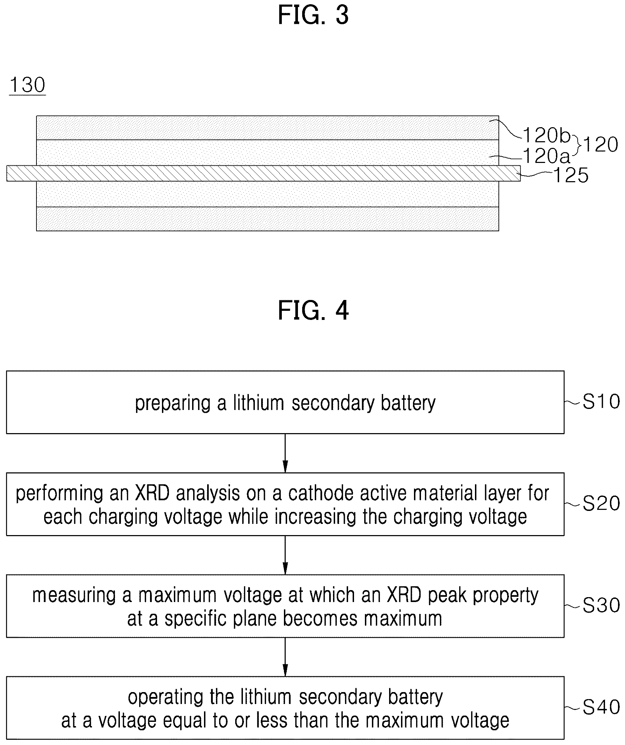

FIG. 3 is a schematic cross-sectional view illustrating an anode included in a lithium secondary battery according to some embodiments.

Referring to FIG. 3, the anode 130 may include an anode active material layer 120 having a multi-layered structure. In example embodiments, the anode active material layer 120 may include a lower active material layer 120a and an upper active material layer 120b.

The lower active material layer 120a and an upper active material layer 120b may be sequentially disposed from a surface of the anode current collector 125. In some embodiments, the lower active material layer 120a may contact the surface of the anode current collector 125, and may be disposed directly on the surface of the anode current collector 125. The upper active material layer 120b may contact the surface of the lower active material layer 120a, and may be disposed directly on the surface of the lower active material layer 120a.

In some embodiments, the lower active material layer 120a may include the carbon-based active material, and the upper active material layer 120b may include a mixture of the carbon-based active material and the silicon-based active material. In an embodiment, the anode active material included in the lower active material layer 120a may substantially consist of the carbon-based active material, and may not include the silicon-based active material.

The lower active material layer 120a may include natural graphite and/or artificial graphite. In some embodiments, the lower active material layer 120a may substantially consist of artificial graphite. In some embodiments, the lower active material layer 120a may include natural graphite and artificial graphite, and a weight of artificial graphite may be greater than a weight of the natural graphite in the lower active material layer 120a. Accordingly, the high-voltage operation stability and structural stability of the anode 130 may be enhanced from chemically and structurally stable artificial graphite.

As described above, the lower active material layer 120a may be formed using the carbon-based active material that is relatively more stable than the silicon-based active material, so that adhesion between the anode active material layer 120 and the anode current collector 125 may be enhanced, and the high-voltage operation stability and structural stability of the anode 130 may be achieved. Additionally, the silicon-based active material may be included in the upper active material layer 120b, and high-capacity properties in the anode 130 may be sufficiently implemented.

In some embodiments, the lower active material layer 120a and the upper active material layer 120b each may include a mixture of the carbon-based active material and the silicon-based active material. In this case, the content of the silicon-based active material in the total weight of the upper active material layer 120b may be greater than the content of the silicon-based active material in the total weight of the lower active material layer 120a.

In some embodiments, a content of the silicon-based active material based on a total weight of the anode active material included in the upper active material layer 120b may be in a range from 10 wt% to 20 wt%, from 10 wt% to 16 wt%, from 12 wt% to 16 wt%, or from 13 wt% to 15 wt%. In the above range, high-voltage operation stability and high-capacity properties of the anode 130 may be effectively balanced.

FIG. 4 is a flowchart illustrating a method of operating or driving a lithium secondary battery according to example embodiments.

Referring to FIG. 4, a lithium secondary battery is prepared (e.g., in an operation of S10). In example embodiments, the lithium secondary battery described with reference to FIGS. 1 to 3 may be manufactured or prepared.

In some embodiments, the lithium secondary battery may be prepared in a formation charged/discharged state under predetermined charging/discharging conditions.

A charging voltage of the prepared lithium secondary battery is increased, and an XRD analysis is performed on the surface of the cathode active material layer 110 included in the cathode 100 for each voltage (e.g., in an operation of S20).

According to embodiments of the present disclosure, the XRD analysis may be performed with respect to a (003) plane or a (107) plane. In example embodiments, the XRD analysis may be performed in a charging voltage range from 3.7V to 4.8V. For example, while increasing the charging voltage by 0.1 V in a range from 3.7V to 4.8V, the XRD analysis may be individually performed for each charging voltage (after charging according to each charging voltage).

For example, the lithium secondary battery may be disassembled after charging by each charging voltage, and the cathode 100 may be separated from the electrode assembly 150. After washing the separated cathode 100 with an organic solvent such as NMP or DMC, the XRD analysis may be performed on the surface of the cathode active material layer 110. The charging may be performed under conditions of CC-CV 0.1C SOC100%, 0.05C CUT-OFF at each charging voltage.

The XRD analysis may be performed under the following measurement conditions.

- X-ray Source Anode: Cu
- Generator Voltage: 45 kV, Tube Current: 40 mA
- Scan 2theta range: 56.5~63°((107) plane), 17~21°((003) plane)
- Step Size: 0.02626°
- Time per Scan: 100s

A maximum voltage at which the XRD property has a maximum value in a specific plane of the lithium-nickel metal oxide included in the cathode active material layer 110 is calculated (e.g., in an operation of S30) from the XRD analysis.

In example embodiments, the specific plane may be a (003) plane or a (107) plane. The XRD property may be a full width at half maximum (FWHM) of a peak, or a ratio of a peak area to a peak intensity (or a peak height) at the (003) plane or the (107) plane (hereinafter, which may be abbreviated as an A/H ratio).

The lithium secondary battery is driven at a voltage (a driving voltage) equal to or less than the measured maximum voltage (e.g., in an operation of S40). The driving voltage may be a charging voltage during an actual operation (charging/discharging operation) of the lithium secondary battery.

During a high-voltage driving of the lithium secondary battery, structural deformation due to lithium deintercalation in the lithium-nickel metal oxide may be caused. For example, as the charging voltage increases, the crystal structure of the lithium-nickel metal oxide may be transformed from an initial structure to an expanded state in volume, and then to a contracted state in volume. Accordingly, the FWHM of the peak and the A/H ratio may be increased.

However, if the charging voltage increases beyond the maximum voltage, a ratio of the contracted state may be excessively increased, and performance of the lithium secondary battery may be deteriorated while further degrading the structural instability of the lithium-nickel metal oxide. Additionally, the FWHM of the peak and the A/H ratio may be decrease again from the maximum value.

A fluctuation in the XRD property described above may be easily measured by the (003) plane or the (107) plane. Thus, an appropriate driving voltage may be selected while predicting driving properties of the lithium secondary battery through the (003) plane or the (107) plane.

In some embodiments, the driving voltage may be selected within a range of 0.8 V from the maximum voltage. In an embodiment, the driving voltage may be selected within a range of 0.6V, 0.5V, 0.4V, 0.3V, or 0.2V from the maximum voltage.

Within the voltage selection range, high-voltage driving of a lithium secondary battery may be implemented, and structural deformation and deterioration of crystal properties of the cathode active material may be effectively prevented.

The present disclosure includes the following numbered aspects:

Aspect 1: A lithium secondary battery, comprising: a cathode comprising a cathode active material layer that includes a lithium-nickel metal oxide; and an anode opposing the cathode; wherein a full width at half maximum ratio defined by Equation 1 or a relative peak area ratio defined by Equation 2 is 70% or more:

[Equation 1] Full width at half maximum ratio (%) = 100 × {(a full width at half maximum of a (107) plane peak measured by an X-ray diffraction (XRD) analysis from the cathode active material layer after charging at a charging voltage of 4.0 V) / (a full width at half maximum ofthe (107) plane peak measured by the XRD analysis from the cathode active material layer after charging at a charging voltage of 4.3 V)}     [Equation 1]

[Equation 2] [00185] Relative peak area ratio (%) = 100 × {(a ratio of a peak area to a peak height at a (107) plane measured by the XRD analysis from the cathode active material layer after charging at a charging voltage of 4.0 V) / (a ratio of a peak area to a peak height at the (107) plane measured by the XRD analysis from the cathode active material layer after charging at a charging voltage of 4.3 V)}.     [Equation 2]

Aspect 2: The lithium secondary battery of aspect 1, wherein the full width at half maximum ratio and the relative peak area ratio are each 70% or more.

Aspect 3: The lithium secondary battery of any one of aspects 1 and 2, wherein the full width at half maximum ratio or the relative peak area ratio is in a range from 75% to 95%.

Aspect 4: The lithium secondary battery of any one of aspects 1 to 3, wherein the lithium-nickel metal oxide has a single particle form.

Aspect 5: The lithium secondary battery of any one of aspects 1 to 4, wherein the lithium-nickel metal oxide further includes cobalt and manganese, and a mole fraction of nickel among the total number of moles of nickel, cobalt and manganese is 0.5 or more, and less than 0.9, preferably in a range from 0.55 to 0.75.

Aspect 6: The lithium secondary battery of any one of aspect s 1 to 5, wherein the lithium-nickel metal oxide further includes at least one auxiliary element selected from Al, W, Zr, Ti, Y and B.

Aspect 7: The lithium secondary battery of aspect 6, wherein the auxiliary element includes three or more elements selected from Al, W, Zr, Ti and Y.

Aspect 8: The lithium secondary battery of any one of aspect s 1 to 7, wherein a loading amount of the cathode active material layer is in a range from 15 mg/cm$^2$ to 25 mg/cm$^2$, and an electrode density of the cathode active material layer is in a range from 3.3 g/cm$^3$ to 3.8 g/cm$^3$.

Aspect 9: The lithium secondary battery of any one of aspects 1 to 8, wherein the anode comprises a cathode current collector, and a cathode active material layer comprising a lower active material layer and an upper active material layer sequentially disposed on the cathode current collector, and the lower active material layer includes a carbon-based active material, and the upper active material layer includes a silicon-based active material.

Aspect 10: The lithium secondary battery of aspect 9, wherein the upper active material layer includes the carbon-based active material and the silicon-based active material, and the lower active material layer is devoid of the silicon-based active material.

Aspect 11: The lithium secondary battery of aspect 9, wherein each of the lower active material layer and the upper active material layer includes the carbon-based active material and the silicon-based active material, and a content of the silicon-based active material based on a total weight of the upper active material layer is greater than a content of the silicon-based active material based on a total weight of the lower active material layer.

Aspect 12: A method for operating a lithium secondary battery, comprising: preparing a lithium secondary battery comprising a cathode active material layer that includes a lithium-nickel metal oxide; performing an X-ray diffraction (XRD) analysis on the cathode active material layer included in the lithium secondary battery for each charging voltage while increasing the charging voltage of the lithium secondary battery; measuring a maximum voltage at which an XRD peak property at a specific plane becomes maximum; and selecting a driving voltage in a voltage range equal to or less than the maximum voltage.

Aspect 13: The method of aspect 12, wherein the XRD peak property includes a full width at half maximum of a peak of the (003) plane or the (107) plane.

Aspect 14: The method of aspect 12, wherein the XRD peak property includes a ratio of an area to a height of a peak at the (003) plane or the (107) plane.

Aspect 15: The method of any one of aspects 12 to 14, wherein the driving voltage is selected in a range from the maximum voltage to a voltage lower than the maximum voltage by 0.6 V.

Hereinafter, experimental examples including specific embodiments are presented to aid in understanding the present disclosure, but these embodiments are merely illustrative of the present disclosure and do not limit the appended claims, and it is obvious to those skilled in the art that various changes and modifications to the embodiments are possible within the scope and technical spirit of the present disclosure, and it is natural that such variations and modifications fall within the appended claims.

Experimental Example 1: Evaluation on charging voltage selection

Fabrication of coin half-cell

A lithium-nickel metal oxide ($LiNi_{0.6}Co_{0.1}Mn_{0.3}O2$) having a single particle form and having a molar ratio of Ni, Co and Mn of 6:1:3 was prepared as a cathode active material. A cathode active material mixture was prepared by mixing the cathode active material, PVDF as a cathode binder, and multi-walled carbon nanotube (MWCNT) as a cathode conductive material in a weight ratio of 98.26:0.90:0.84.

The cathode active material mixture may be coated on an aluminum current collector, and dried and pressed to form a cathode active material layer and a cathode. An electrode loading amount of the cathode active material layer was controlled to be 24.3 mg/cm², and an electrode density was controlled to be 3.654 g/cc.

A lithium metal foil was used as a counter electrode (anode). A 1M $LiPF_6$ solution using a mixed solvent of EC/EMC (volume ratio: 30/70) was used as an electrolyte.

The cathode and the anode were punched into Φ14 and Φ16 sizes, respectively, and stacked. An electrode cell was formed by inserting a separator (polyethylene, thickness: 25 μm) between the cathode and the anode, and then an electrolyte solution was injected and impregnated for 12 hours or more to obtain a 2032 type coin-half cell.

A formation charge/discharge was performed once for the coin-half cell fabricated as described above (charging condition: CC-CV 0.1C 4.3V 0.005C CUT-OFF, discharging condition: CC 0.1C 2.5V CUT-OFF).

After the formation charge/discharge, the coin-half cell was charged while increasing a charging voltage by 0.1 V from 3.7 V (CC-CV 0.1C SOC100%, 0.05C CUT-OFF), and the cathode was separated from the coin-half cell. After washing the separated cathode with NMP, an XRD analysis was performed on the surface of the cathode active material layer. A full width at half maximum and a peak area/peak height (an A/H ratio) of an XRD peak at a (003) plane and a (107) plane were measured through the XRD analysis.

The XRD analysis was performed under the following conditions.

- X-ray Source Anode: Cu
- Generator Voltage: 45 kV, Tube Current: 40 mA
- Scan 2theta range: 56.5~63° ((107) plane), 17~21° ((003) plane)
- Step Size: 0.02626°
- Time per Scan: 100s

Specifically, a height (intensity) and an area of each diffraction peak were measured under the following conditions using a profile fitting program (Malvern Panalytical, HighScore Plus).

Background: Banding Factor (0), Granularity (100)

- Profile Function: Pseudo-Voigt

The XRD measurement results according to the voltage measured at the (003) plane and the (107) plane are shown in Table 1 and Table 2, respectively.

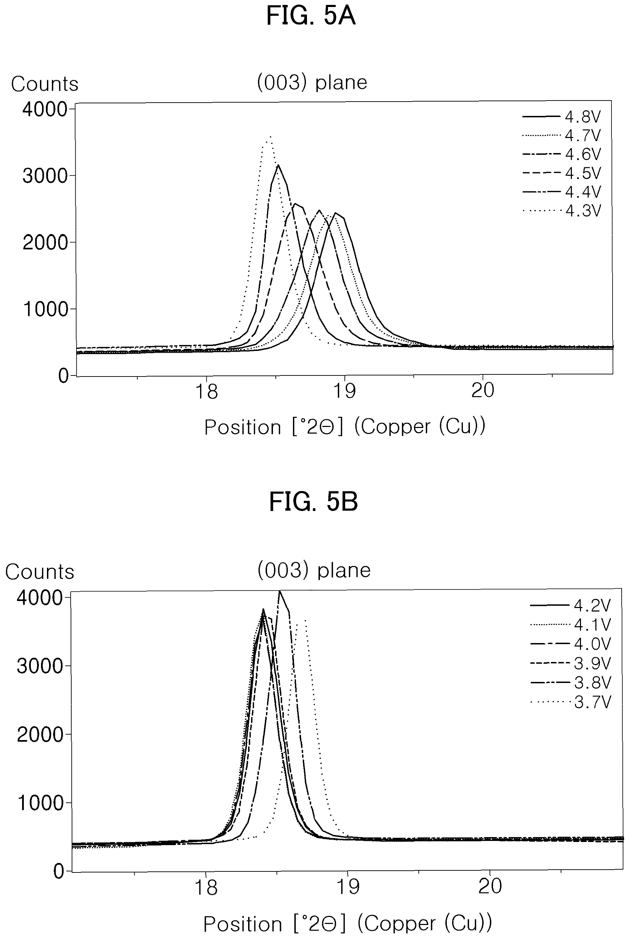

FIG. 5A and FIG. 5B are XRD measurement graphs according to the voltage measured at the (003) plane.

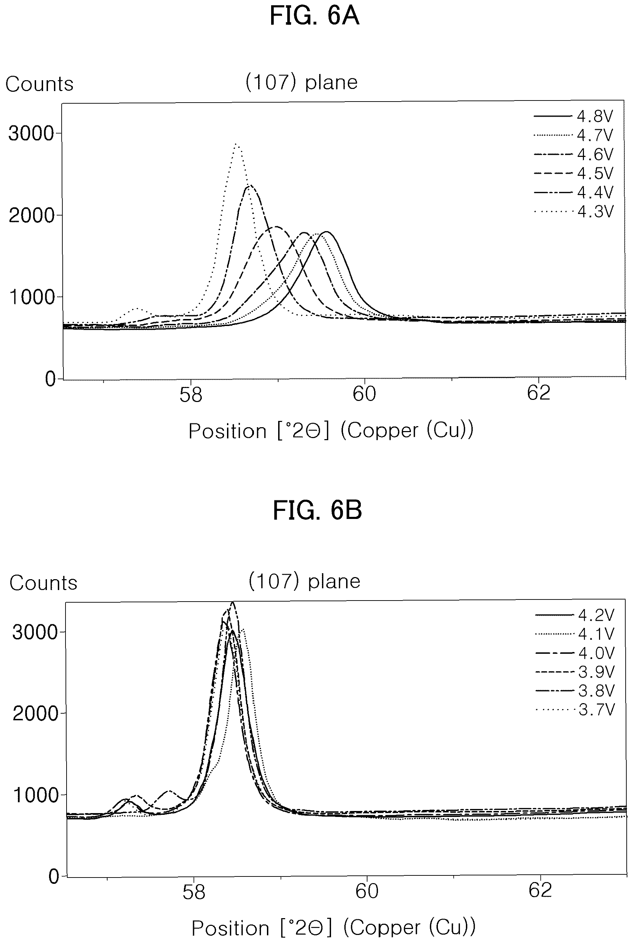

FIG. 6A and FIG. 6B are XRD measurement graphs according to the voltage measured at the (107) plane.

[Table 1]

| voltage | (003) plane XRD measurement | | | | |
|---|---|---|---|---|---|
| | 2θ | peak height (H) | peak area (A) | full width at half maximum (FWHM) | A/H |
| 3.7V | 18.663 | 2325 | 565 | 0.2038 | 0.24 |
| 3.8V | 18.527 | 2589 | 647 | 0.2015 | 0.25 |
| 3.9V | 18.422 | 2405 | 665 | 0.2161 | 0.28 |
| 4.0V | 18.385 | 2301 | 653 | 0.2203 | 0.28 |
| 4.1V | 18.378 | 2373 | 681 | 0.2199 | 0.29 |
| 4.2V | 18.403 | 2380 | 702 | 0.2312 | 0.29 |
| 4.3V | 18.442 | 2243 | 699 | 0.2457 | 0.31 |
| 4.4V | 18.532 | 1869 | 664 | 0.2901 | 0.36 |
| 4.5V | 18.657 | 1480 | 628 | 0.3685 | 0.42 |
| 4.6V | 18.797 | 1350 | 610 | 0.3824 | 0.45 |
| 4.7V | 18.884 | 1336 | 596 | 0.3660 | 0.45 |
| 4.8V | 18.946 | 1371 | 604 | 0.3598 | 0.44 |

[Table 2]

| voltage | (107) plane XRD measurement | | | | |
|---|---|---|---|---|---|
| | 2θ | peak height (H) | peak area (A) | full width at half maximum (FWHM) | A/H |
| 3.7V | 58.570 | 462 | 187 | 0.379 | 0.40 |
| 3.8V | 58.464 | 515 | 227 | 0.388 | 0.44 |
| 3.9V | 58.387 | 504 | 238 | 0.405 | 0.47 |
| 4.0V | 58.367 | 480 | 234 | 0.379 | 0.49 |
| 4.1V | 58.386 | 470 | 234 | 0.388 | 0.50 |
| 4.2V | 58.463 | 458 | 238 | 0.405 | 0.52 |
| 4.3V | 58.545 | 434 | 232 | 0.417 | 0.53 |
| 4.4V | 58.723 | 338 | 219 | 0.522 | 0.65 |
| 4.5V | 58.962 | 245 | 205 | 0.725 | 0.84 |
| 4.6V | 59.238 | 216 | 203 | 0.770 | 0.94 |
| 4.7V | 59.414 | 217 | 196 | 0.699 | 0.90 |
| 4.8V | 59.542 | 229 | 196 | 0.652 | 0.86 |

Referring to Table 1, a voltage at which the maximum full width at half maximum was measured and a voltage at which the maximum A/H ratio was measured from the (003) plane were each measured as 4.6V.

Referring to Table 2, a voltage at which the maximum full width at half maximum was measured and the voltage at which the maximum A/H ratio was measured from the (107) plane were each measured as 4.6V.

Examples and Comparative Examples

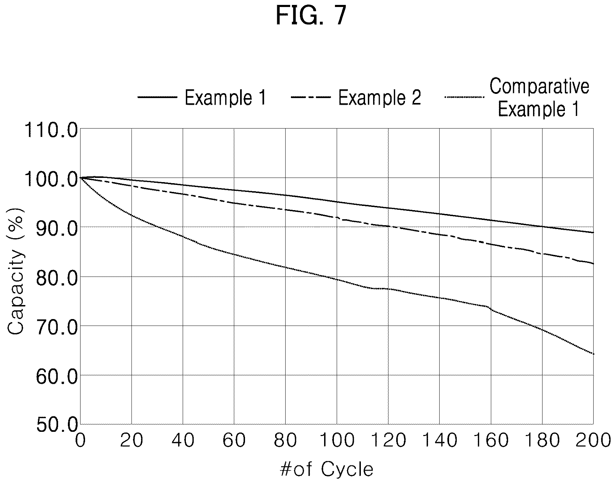

Charging/discharging was repeatedly performed by adjusting the charging voltage of the coin-half cell to 4.4V (Example 1), 4.6V (Example 2), and 4.8V (Comparative Example 1), with charging (CC-CV 0.1C SOC100%, 0.05C CUT-OFF) and discharging (CC, 0.1C 3.0V CUT-OFF) as one cycle at room temperature (25°C).
A room temperature capacity retention was measured by converting a discharge capacity of a corresponding cycle into a percentage relative to a discharge capacity at the first cycle.
The measurement results are shown in Table 3 and FIG. 7.

[Table 3]

|  | maximum voltage | driving voltage (charging voltage) | room temperature capacity retention (%) | | |
|---|---|---|---|---|---|
|  |  |  | 50 cycles | 100 cycles | 200 cycles |
| Example 1 | 4.6V | 4.4V | 98.0 | 95.2 | 86.2 |
| Example 2 |  | 4.6V | 95.9 | 91.9 | 79.3 |
| Comparative Example 1 |  | 4.8V | 86.2 | 82.7 | 64.3 |

Referring to Table 3 and FIG. 7, in Comparative Example 1 where the secondary battery was operated by selecting a voltage higher than the maximum voltage at which the maximum XRD property from the (003) plane and the (107) plane were measured, the room temperature capacity retention was significantly decreased as the cycles were repeated.

Experimental Example 2: Evaluation on battery properties according to FWHM ratio relative peak area ratio

(1) Fabrication of secondary battery (Example 3)

1) Preparation of cathode active material

$NiSO_4$, $CoSO_4$ and $MnSO_4$ were mixed in a molar ratio of 0.6:0.1:0.3, respectively, using distilled water from which internal dissolved oxygen was removed by bubbling with $N_2$ for 24 hours. The solution was introduced into a reactor at 55°C, and NaOH and $NH_3H_2O$ were used as a precipitant and a chelating agent, respectively, to proceed with a co-precipitation reaction for 36 hours to obtain $Ni_{0.6}Co_{0.1}Mn_{0.3}(OH)_2$ as a transition metal precursor. The obtained precursor was dried at 80°C for 12 hours, and then re-dried at 110°C for 12 hours.
Lithium carbonate and the transition metal precursor were added to a dry high-speed mixer in a molar ratio of 1.05:1 and uniformly mixed for 5 minutes. The mixture was placed in a firing furnace and continuously heated to 1,000°C at a heating rate of 2 °C/minute while passing oxygen at a flow rate of 10 mL/min, and the temperature was maintained at 1,000°C for 10 hours. Thereafter, natural cooling to room temperature was performed, followed by pulverization and classification, to prepare lithium-nickel metal oxide particles having a single particle form and a composition of $LiNi_{0.6}Co_{0.1}Mn_{0.3}$.
The prepared lithium-transition metal composite oxide particles, aluminum hydroxide, yttrium oxide, tungsten oxide and zirconium oxide were each placed in a firing furnace as a coating/doping source, heated to 700 °C at a heating rate of 2 °C/minute, and heat-treated at 700 °C for 5 hours to form a coating/doping on the lithium-nickel metal oxide particles.
Contents of Al, Y, W and Zr measured by ICP-OES (Inductively Coupled Plasma-Optical Emission Spectroscopy) based on a total weight of nickel, cobalt and manganese contained in the lithium-nickel composite oxide particles measured by the ICP-OES, were each adjusted in a range of 500 ppm to 3000 ppm.

2) Fabrication a cathode

A cathode mixture having components and contents shown in Table 5 was prepared. The cathode mixture was coated on an aluminum substrate, and then dried and pressed to form a cathode including a cathode active material layer.

3) Fabrication of anode

A lower anode mixture and an upper anode mixture having components and contents listed in Table 6 were prepared. The lower anode mixture was coated and dried on a copper substrate to form a lower coating layer, and the upper anode mixture was coated and dried on the lower coating layer to form an upper coating layer. The upper coating layer and the lower coating layer were co-pressed to form an anode.

4) Fabrication of secondary battery (full cell)

A secondary battery cell was obtained by interposing a polyolefin separator between the cathode and the anode. After accommodating the secondary battery cell in a pouch, a 1.1 M $LiPF_6$ solution using a mixed solvent of ethylene carbonate (EC), propylene carbonate (PC) and ethyl methyl carbonate (EMC) was injected as an electrolyte solution, and then sealed to obtain a pouch-type lithium secondary battery.

Thereafter, a pre-charging corresponding to 50% of a total capacity was performed with a current corresponding to 0.75 C. Using a PPC (press pre-charging) device, a temperature of the PPC device in contact with the secondary battery was adjusted to 45 °C. Thereafter, degassing, aging for 24 hours or more, and formation charging/discharging were performed (charging conditions: CC-CV 0.25C 4.2V 0.05C CUT-OFF, discharging conditions: CC 0.25C 2.5V CUT-OFF).

(2) Additional Examples and Comparative Examples

A secondary battery was manufactured by the same method as that in Example 3, except that the cathode composition/structure was changed as shown in Tables 4 and 5, and the anode composition/structure was changed as shown in Table 6.

In Example 5, a secondary battery was manufactured by the same method as that in Example 3, except that a carbon coating treatment was performed on the cathode current collector (the aluminum substrate).

[Table 4]

| | transition metal molar ratio | | | coating/ doping material |
|---|---|---|---|---|
| | Ni | Co | Mn | |
| Example 3 | 0.6 | 0.1 | 0.3 | Al, Y, W, Zr |
| Example 4 | 0.6 | 0.1 | 0.3 | Al, Y, W, Zr |
| Example 5 | 0.6 | 0.1 | 0.3 | Al, Y, W, Zr |
| Example 6 | 0.6 | 0.1 | 0.3 | Al, Y, W, Zr |
| Example 7 | 0.76 | 0.02 | 0.22 | Al, W, Zr, Ti |
| Comparative Example 2 | 0.88 | 0.07 | 0.05 | Al, W, Zr, B |
| Comparative Example 3 | 0.76 | 0.02 | 0.22 | - |
| Comparative Example 4 | 0.6 | 0.1 | 0.3 | Al, Y, W, Zr |

[Table 5]

| | cathode composition (wt%) | | | | cathode construction | |
|---|---|---|---|---|---|---|
| | active material | binder | MWCNT | carbon-black | loading amount $(mg/cm^2)$ | electrode density (g/cc) |
| Example 3 | 98.26 | 0.9 | 0.84 | - | 23.7 | 3.646 |
| Example 4 | 98.26 | 0.9 | 0.6 | 0.24 | 23.7 | 3.646 |
| Example 5 | 98.26 | 0.9 | 0.84 | - | 23.7 | 3.646 |
| Example 6 | 98.26 | 0.9 | 0.84 | - | 23.7 | 3.646 |
| Example 7 | 98.26 | 0.9 | 0.84 | - | 22.5 | 3.629 |
| Comparative Example 2 | 98.26 | 0.9 | 0.84 | - | 21.1 | 3.638 |
| Comparative Example 3 | 98.26 | 0.9 | 0.84 | - | 22.5 | 3.629 |
| Comparative Example 4 | 98.26 | 0.9 | 0.84 | - | 19.5 | 3.645 |

[Table 6]

| | | anode composition (wt%) | | | | | | anode structure | |
|---|---|---|---|---|---|---|---|---|---|
| | active material layer | artificial graphite | natural graphite | SiOx (0<x<2) | MWCNT (with dispersant) | CMC | SBR | loading amount (mg/cm$^2$) | electrode density (g/cc) |
| Example 3 | upper layer | 84.050 | - | 14.0 | 0.150 | 1.20 | 0.60 | 11.20 | 1.635 |
| | lower layer | 96.400 | - | - | - | 1.20 | 2.40 | | |
| | total | 90.225 | - | 7.0 | 0.075 | 1.20 | 1.50 | | |
| Example 4 | upper layer | 84.050 | - | 14.0 | 0.150 | 1.20 | 0.60 | 11.20 | 1.635 |
| | lower layer | 96.400 | - | - | - | 1.20 | 2.40 | | |
| | total | 90.225 | - | 7.0 | 0.075 | 1.20 | 1.50 | | |
| Example 5 | upper layer | 84.050 | - | 14.0 | 0.150 | 1.20 | 0.60 | 11.20 | 1.635 |
| | lower layer | 96.400 | - | - | - | 1.20 | 2.40 | | |
| | total | 90.225 | - | 7.0 | 0.075 | 1.20 | 1.50 | | |
| Example 6 | upper layer | 84.050 | - | 14.0 | 0.150 | 1.20 | 0.60 | 11.10 | 1.632 |
| | lower layer | - | 96.400 | - | - | 1.20 | 2.40 | | |
| | total | 42.025 | 48.200 | 7.0 | 0.075 | 1.20 | 1.50 | | |
| Example 7 | upper layer | 86.050 | - | 12.0 | 0.150 | 1.20 | 0.60 | 11.60 | 1.634 |
| | lower layer | 96.400 | - | - | - | 1.20 | 2.40 | | |
| | total | 91.225 | 0.000 | 6.0 | 0.075 | 1.20 | 1.50 | | |
| Comparative Example 2 | upper layer | 86.050 | - | 12.0 | 0.150 | 1.20 | 0.60 | 11.60 | 1.634 |
| | lower layer | 96.400 | - | - | - | 1.20 | 2.40 | | |
| | total | 91.225 | - | 6.0 | 0.075 | 1.20 | 1.50 | | |
| Comparative Example 3 | upper layer | 86.050 | - | 12.0 | 0.150 | 1.20 | 0.60 | 11.60 | 1.634 |
| | lower layer | 96.400 | - | - | - | 1.20 | 2.40 | | |
| | total | 91.225 | - | 6.0 | 0.075 | 1.20 | 1.50 | | |
| Comparative Example 4 | upper layer | 84.050 | - | 14.0 | 0.150 | 1.20 | 0.60 | 11.20 | 1.635 |
| | lower layer | 96.400 | - | | | 1.20 | 2.40 | | |
| | total | 90.225 | 0.000 | 7.0 | 0.075 | 1.20 | 1.50 | | |

(3) Measurement of FWHM ratio/relative peak area ratio

Each secondary battery of Examples and Comparative Examples were charged at charging voltages of 4.3V and 4.0V, (CC-CV 0.1C SOC100%, 0.05C CUT-OFF), and then an XRD analysis was performed. The cathode were separated from the secondary battery after each of the 4.3V charging and after the 4.0V charging. The separated cathode was washed with NMP, and then the XRD analysis was performed on a surface of the cathode active material layer. A full width at half maximum and a peak area/peak height (A/H ratio) of an XRD peak at ae (107) plane were measured through the XRD analysis.

The XRD analysis was performed under the following conditions.

- X-ray Source Anode: Cu
- Generator Voltage: 45 kV, Tube Current: 40 mA
- Scan 2theta range: 56.5~63°
- Step Size: 0.02626°
- Time per Scan: 100s

Specifically, the height (intensity) and the area of the diffraction peak were measured using a profile fitting program (Malvern Panalytical, HighScore Plus) under the following conditions.

- Background: Banding Factor(0), Granularity(100)
- Profile Function: Pseudo Voigt

Thereafter, the full width at half maximum ratio according to Equation 1 and the relative peak area ratio according to Equation 2 were calculated.

(4) Evaluation on room temperature life-span (capacity retention ratio)

Repeated charging/discharging was performed using the secondary batteries of the Examples and the Comparative Examples at a voltage of 4.4V at 25°C, with charging (CC-CV 1/3C SOC100%, 0.05C CUT-OFF) and discharging (CC, 1/3C SOC4% CUT-OFF) being set as a single cycle. A ratio of a discharge capacity after the 200th cycle relative to a discharge capacity at the first cycle and a ratio of a discharge capacity at the 400th cycle relative to the discharge capacity at the first cycle were each measured as a room temperature capacity retention (%).

(5) Measurement on resistance increase ratio

Increase ratios of resistance (DCIR) after the 200th cycle and the 400the cycle relative to an initial resistance (DCIR) of the secondary battery were measured while repeating the above-described room temperature cycles.
The evaluation results are described in Table 7 and Table 8 below.

[Table 7]

| | 4.3V FWHM | 4.0V FWHM | FWHM ratio (%) | 4.3V (A/H) | 4.0V (A/H) | relative peak area ratio (%) |
|---|---|---|---|---|---|---|
| Example 3 | 0.417 | 0.379 | 90.9 | 0.53 | 0.49 | 92.5 |
| Example 4 | 0.422 | 0.381 | 90.3 | 0.55 | 0.49 | 89.1 |
| Example 5 | 0.463 | 0.385 | 83.2 | 0.58 | 0.50 | 86.2 |
| Example 6 | 0.442 | 0.382 | 86.4 | 0.54 | 0.49 | 90.7 |
| Example 7 | 0.485 | 0.354 | 73.1 | 0.68 | 0.48 | 70.6 |
| Comparative Example 2 | 0.406 | 0.244 | 60.2 | 0.66 | 0.37 | 56.7 |
| Comparative Example 3 | 0.599 | 0.325 | 54.3 | 0.75 | 0.43 | 57.7 |
| Comparative Example 4 | 0.545 | 0.372 | 68.3 | 0.69 | 0.48 | 69.6 |

[Table 8]

| | room temperature capacity retention (%) | | resistance increase ratio(%) | |
|---|---|---|---|---|
| | 200 cycles | 400 cycles | 200 cycles | 400 cycles |
| Example 3 | 97.6 | 95.4 | 106.4 | 129.2 |
| Example 4 | 96.8 | 94.8 | 106.8 | 116.4 |
| Example 5 | 97.4 | 95.3 | 105.5 | 112.3 |
| Example 6 | 96.1 | 93.2 | 111.2 | 140.5 |
| Example 7 | 95.6 | 93.2 | 113.6 | 131.7 |
| Comparative Example 2 | 89.2 | 81.9 | 136.9 | 167.7 |
| Comparative Example 3 | 90.9 | 74.0 | 138.4 | 189.3 |
| Comparative Example 4 | 92.1 | 84.3 | 120.3 | 156.2 |

(6) Evaluation on high-temperature life-span (capacity retention)

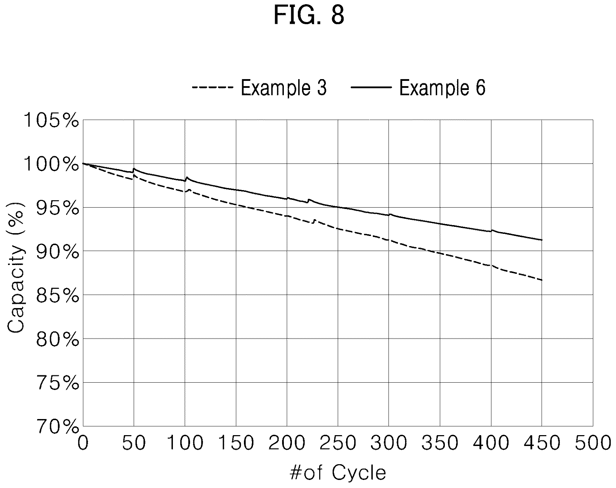

Repeated charging/discharging was performed using the secondary batteries of Example 3 and Example 6 at a voltage of 4.4V at 45°C, with charging (CC-CV 1/3C SOC100%, 0.05C CUT-OFF) and discharging (CC, 1/3C SOC4% CUT-OFF) being set as a single cycle. While repeating the cycle, a ratio of the discharge capacity after each cycle relative to a discharge capacity at the first cycle was measured as a high temperature capacity retention (%). The measurement results are shown in the graph of FIG. 8.

(7) Evaluation on rapid life-span (capacity retention)

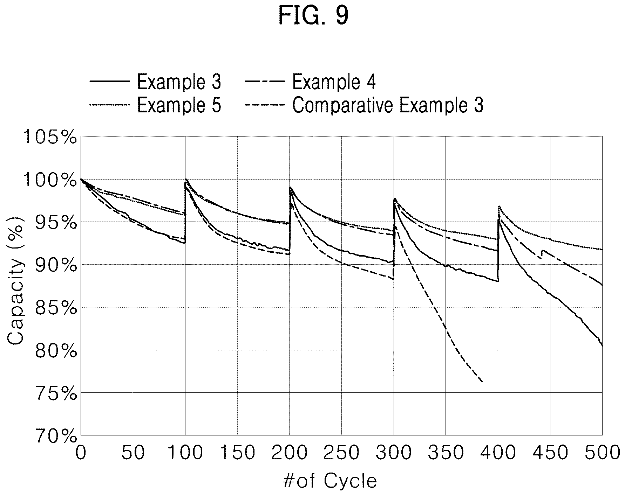

Rapid charging/discharging was performed using the secondary batteries of Examples 3 to 5 and Comparative Example 3 at 25°C within a DOD70 (SOC10-80%) range, with charging at 2.5C/2.25C/2.0C/1.75C/1.5C/1.25C/1.0C C-rate and discharging at 1/3C C-rate being set as a single cycle. While repeating the cycles with a rest time of 20 minutes between the charging/discharging cycles, a rapid charging capacity retention was measured. The measurement results are shown in the graph of FIG. 9.

Referring to Table 7, Table 8, FIG. 8, and FIG. 9, improved capacity retentions under room temperature, high temperature and rapid charging conditions were entirely provided in Examples where the FWHM ratio of Equation 1 and the relative peak area ratio of Equation 2 were maintained as being 70% or more. Further, the increase in resistance of the battery was reduced even during repeated charging/discharging compared to those from Comparative Examples.

**Claims**

1. A lithium secondary battery, comprising:

   a cathode comprising a cathode active material layer that includes a lithium-nickel metal oxide; and
   an anode opposing the cathode;
   wherein a full width at half maximum ratio defined by Equation 1 or a relative peak area ratio defined by Equation 2 is 70% or more:

   Full width at half maximum ratio (%) = 100 × {(a full width at half maximum of a (107) plane peak measured by an X-ray diffraction (XRD) analysis from the cathode active material layer after charging at a charging voltage of 4.0 V) / (a full width at half maximum of the (107) plane peak measured by the XRD analysis from the cathode active material layer after charging at a charging voltage of 4.3 V)}　　　　　[Equation 1]

   Relative peak area ratio (%) = 100 × {(a ratio of a peak area to a peak height at a (107) plane measured by the XRD analysis from the cathode active material layer after charging at a charging voltage of 4.0 V) / (a ratio of a peak area to a peak height at the (107) plane measured by the XRD analysis from the cathode active material layer after charging at a charging voltage of 4.3 V)}.　　　　　[Equation 2]

2. The lithium secondary battery of claim 1, wherein the full width at half maximum ratio and the relative peak area ratio are each 70% or more.

3. The lithium secondary battery of any one of claims 1 and 2, wherein the full width at half maximum ratio or the relative peak area ratio is in a range from 75% to 95%.

4. The lithium secondary battery of any one of claims 1 to 3, wherein the lithium-nickel metal oxide has a single particle form.

5. The lithium secondary battery of any one of claims 1 to 4, wherein the lithium-nickel metal oxide further includes cobalt and manganese, and a mole fraction of nickel among the total number of moles of nickel, cobalt and manganese is 0.5 or more, and less than 0.9, preferably in a range from 0.55 to 0.75.

6. The lithium secondary battery of any one of claims 1 to 5, wherein the lithium-nickel metal oxide further includes at least one auxiliary element selected from Al, W, Zr, Ti, Y and B.

7. The lithium secondary battery of claim 6, wherein the auxiliary element includes three or more elements selected from Al, W, Zr, Ti and Y.

8. The lithium secondary battery of any one of claims 1 to 7, wherein a loading amount of the cathode active material layer is in a range from 15 mg/cm$^2$ to 25 mg/cm$^2$, and
an electrode density of the cathode active material layer is in a range from 3.3 g/cm$^3$ to 3.8 g/cm$^3$.

9. The lithium secondary battery of any one of claims 1 to 8, wherein the anode comprises a cathode current collector, and a cathode active material layer comprising a lower active material layer and an upper active material layer sequentially disposed on the cathode current collector, and
the lower active material layer includes a carbon-based active material, and the upper active material layer includes a silicon-based active material.

10. The lithium secondary battery of claim 9, wherein the upper active material layer includes the carbon-based active material and the silicon-based active material, and the lower active material layer is devoid of the silicon-based active material.

11. The lithium secondary battery of claim 9, wherein each of the lower active material layer and the upper active material layer includes the carbon-based active material and the silicon-based active material, and
a content of the silicon-based active material based on a total weight of the upper active material layer is greater than a content of the silicon-based active material based on a total weight of the lower active material layer.

12. A method for operating a lithium secondary battery, comprising:

    preparing a lithium secondary battery comprising a cathode active material layer that includes a lithium-nickel metal oxide;
    performing an X-ray diffraction (XRD) analysis on the cathode active material layer included in the lithium secondary battery for each charging voltage while increasing the charging voltage of the lithium secondary battery;
    measuring a maximum voltage at which an XRD peak property at a specific plane becomes maximum; and
    selecting a driving voltage in a voltage range equal to or less than the maximum voltage.

13. The method of claim 12, wherein the XRD peak property includes a full width at half maximum of a peak of the (003) plane or the (107) plane.

14. The method of claim 12, wherein the XRD peak property includes a ratio of an area to a height of a peak at the (003) plane or the (107) plane.

15. The method of any one of claims 12 to 14, wherein the driving voltage is selected in a range from the maximum voltage to a voltage lower than the maximum voltage by 0.6 V.

# FIG. 1

# FIG. 2

# FIG. 3

130

120b } 120
120a }
125

# FIG. 4

| preparing a lithium secondary battery | S10 |

| performing an XRD analysis on a cathode active material layer for each charging voltage while increasing the charging voltage | S20 |

| measuring a maximum voltage at which an XRD peak property at a specific plane becomes maximum | S30 |

| operating the lithium secondary battery at a voltage equal to or less than the maximum voltage | S40 |

## FIG. 5A

## FIG. 5B

## FIG. 6A

(107) plane

## FIG. 6B

(107) plane

FIG. 7

## FIG. 8

----- Example 3    —— Example 6

# FIG. 9

Legend:
—— Example 3   —·— Example 4
········ Example 5   ----- Comparative Example 3

Europäisches
Patentamt

European
Patent Office

Office européen
des brevets

# EUROPEAN SEARCH REPORT

**Application Number**

EP 25 22 2410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2024 0068348 A (SK ON CO LTD [KR]; SK INNOVATION CO LTD [KR]) 17 May 2024 (2024-05-17) | 1,4-6, 8-15 | INV. H01M4/36 H01M4/505 |
| Y | * paragraphs [0139], [0140], [0147], [-155], [0191], [0085], [0196], [0080]; example 1 * <br> * paragraphs [0090], [0147], [0152], [0192], [0130] * <br> ----- | 2,3,7 | H01M4/525 H01M10/0525 |
| Y | US 2024/396037 A1 (LEE SANG HAN [KR] ET AL) 28 November 2024 (2024-11-28) * paragraph [0075] * <br> ----- | 2,3 | |
| Y | US 2023/361291 A1 (DO JI YAE [KR] ET AL) 9 November 2023 (2023-11-09) * paragraphs [0070], [0096] - [0118]; examples 1-7 * <br> ----- | 7 | |

**TECHNICAL FIELDS SEARCHED (IPC)**

H01M

The present search report has been drawn up for all claims

| Place of search | Date of completion of the search | Examiner |
|---|---|---|
| The Hague | 1 April 2026 | Mohsin, Ijaz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 2410

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2026

| Patent document cited in search report | Publication date | Patent family member(s) | | Publication date |
|---|---|---|---|---|
| KR 20240068348 A | 17-05-2024 | CN | 120202558 A | 24-06-2025 |
| | | EP | 4611071 A1 | 03-09-2025 |
| | | KR | 20240068348 A | 17-05-2024 |
| | | WO | 2024101556 A1 | 16-05-2024 |
| US 2024396037 A1 | 28-11-2024 | CN | 113363439 A | 07-09-2021 |
| | | CN | 115275135 A | 01-11-2022 |
| | | DE | 202021004474 U1 | 09-12-2024 |
| | | EP | 3919445 A1 | 08-12-2021 |
| | | KR | 102293034 B1 | 24-08-2021 |
| | | US | 2021384505 A1 | 09-12-2021 |
| | | US | 2024396037 A1 | 28-11-2024 |
| US 2023361291 A1 | 09-11-2023 | CN | 117038952 A | 10-11-2023 |
| | | EP | 4276074 A1 | 15-11-2023 |
| | | KR | 20230156993 A | 16-11-2023 |
| | | US | 2023361291 A1 | 09-11-2023 |

EPO FORM P0459

For more details about this annex : see Official Journal of the European Patent Office, No. 12/82